# EUROPEAN PATENT APPLICATION

(11) **EP 3 862 334 A1**
(43) Date of publication of application: **11.08.2021**
(21) Application number: 20398001.6
(22) Date of filing: 07.02.2020
(51) Int. Cl.: C04B 26/08, C04B 28/02, C04B 28/04, C04B 28/08, H01F 1/37, H01F 38/14

(54) **CEMENT-BASED SUBSTRATE FOR INDUCTION ENERGY TRANSFER SYSTEMS**

(71) Applicant: Secil-Companhia Geral de Cal e Cimento S.A., 1600-079 Lisboa (PT)
(72) Inventor: Vermelhudo, Vitor Manuel Aires, 2810-072 Laranjeiro-Almada (PT); de Sequeira Serra Nunes, Angela Maria Jesus, 2925-181 Azeitão (PT); da Fonseca, Joana Diniz, 4760-034 Vila Nova de Famalicão (PT); Esteves, David Seixas, 4760-034 Vila Nova de Famalicão (PT); Fernandes da Silva, João Manuel, 4760-034 Vila Nova de Famalicão (PT); Pimenta Machado, Vasco Gonçalves, 4760-034 Vila Nova de Famalicão (PT); Poças Gonçalves, José Joaquim, 4760-034 Vila Nova de Famalicão (PT)
(74) Representative: Pereira da Cruz, Joao

(57) **Abstract**

The present invention falls within the technical field of induction energy transfer systems, more particularly, it refers to systems used for charging electronic devices or electric vehicles.

In this context, the object of the present invention is a cement-based substrate with specific physical and chemical characteristics that allows an improvement in the propagation of the electromagnetic field generated by an emitting coil, leading to an increase in the efficiency of induction energy transfer systems.

Additionally, an induction energy transfer system is also the object of the present invention, in which the emitting coil is embedded in the developed substrate.

## Description

### TECHNICAL FIELD

The present application falls within the field of inductive charging systems.

### BACKGROUND

Nowadays, technology based on the electromagnetic induction principle is employed in the charging of electric batteries, having become very popular among portable and wearable devices, including mobile phones, smartwatches or medical devices, among others. In fact, the growing demand for portable electronic devices triggered the development of wireless charging technologies, and their integration into more complex systems such as electric vehicles is already well known as an alternative to the conventional plug-in charging systems.

In theoretical terms, induction systems are based on electrical energy transfer between an energy emitting unit and a receiving unit, without physical or electrical contact between them. One of the main components for the operation of these systems is the electric coil, which is present in both the energy emitting unit and receiving unit. The coil of the emitting unit, when sized and an alternating electric current adjusted frequency and amplitude passes through it, generates a variable electromagnetic field oriented in a direction perpendicular to the turns forming the coil, inducing an electric current in a second coil - receiving unit coil - that is in the vicinity of the first one.

The technology developed has its closest background in charging systems based on the electromagnetic induction principle, being already in the public domain the integration of this type of systems into different substrates, serving several application scenarios. For example, US 20040189246 A1 and US 8901880 B2 describe wireless charging systems, integrated into different types of substrates, such as a desk, for charging a computer mouse, or into computer monitor or lamp bases.

However, the characteristics of the substrate influence the energy transfer performance between the emitting and receiving coils, which implies the adaptation of these systems to each application scenario. A paradigmatic example is the usage of this type of systems for charging electric vehicles, where the substrate is concrete or a similar material.

In this sense, US 8030888 B2 and US 20130154553 A1 focus on the wireless charging of electric vehicles, with the charging systems installed in the ground along the road. Still in this context, US 20150028807 A1 discloses the possibility of embedding said charging systems in asphalt, concrete or rubber. US 8913952 B2, US 20120043887 A1, US 20110115613 A1 focus on the supply of energy to sensors inserted into concrete structures, namely the wireless energy transfer to these sensors through walls made of different types of materials, namely cement.

In view of the above, it can be concluded that the state of the art already discloses the integration of induction energy transfer systems into various types of substrates and for various application scenarios. However, in the specific case of substrates such as concrete or similar materials, the known disclosures are very generic, not describing the technical constraints of the implementation, nor the efficiency problems resulting from the integration of induction energy transfer systems in such materials, whose physical properties are so specific.

As a result, the definition of the ideal properties of a substrate with the characteristics of concrete or similar material is missing so far in the state of the art, which would solve the problems resulting from the integration of induction energy transfer systems on such a substrate.

### TECHNICAL PROBLEMS SOLVED

The present application describes a solution for integrating induction energy transfer systems into cement-based substrates, allowing an increase in efficiency over existing systems.

In fact, known state of the art induction systems, when integrated in cement-based substrates, have natural efficiency problems related to an insufficient energy transfer between emitting and receiving units or, in the worst case, the total inoperability of the system. This is due not only to the incorrect alignment between the turns of the coils present in said units, but also to the total disregard for the physical and chemical properties of the material forming the substrate, which leads to a low efficiency.

Specifically, on a typical substrate such as concrete, relative humidity levels are usually quite high - in the order of 75% - which contributes not only to high values of electrical permeability and ionic conductivity, thus increasing system losses due to power dissipation by inducing eddy currents into the substrate itself, but it is also responsible for damaging the conductive turns of the coils in the embedding process, thus reflecting in a poor performance of the induction system and a rapid wear of the encapsulation of the conductive turns of the coils.

The proposed solution allows to make said substrate and its properties compatible with the components of the integrated induction systems, resulting in a better electromagnetic field propagation and, consequently, an improvement in the efficiency of the induction system in the order of 300%, as compared to the use of conventional concrete.

### SUMMARY OF THE INVENTION

It is thus an object of the present invention a cement-based substrate for an induction energy transfer system. Said substrate is specially modified in terms of its physical and chemical properties, allowing an increase in system efficiency.

It is additionally an object of the present invention an induction energy transfer system comprising the substrate of the invention, in which the receiving unit of said system is embedded.

### DESCRIPTION OF THE FIGURE

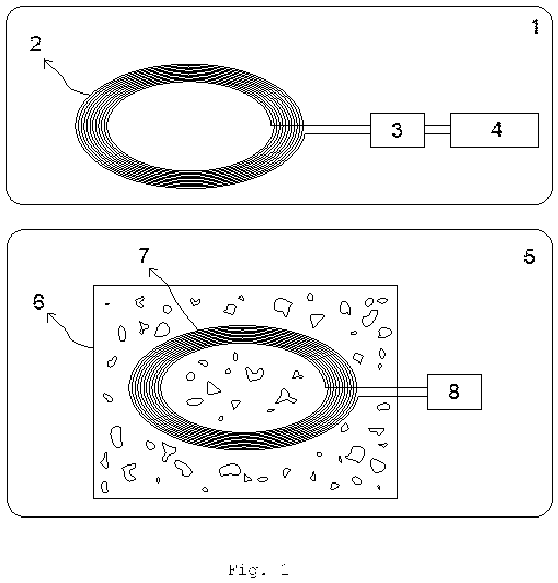

Figure 1 - representation of a preferred embodiment of the induction energy transfer system of the invention, where the reference signals mean:
1 - receiving unit
2 - receiving coil;
3 - electronic system of the receiving unit;
4 - electrical device;
5 - emitting unit;
6 - cement-based substrate;
7 - emitting coil;
8 - electronic system of the emitting unit.

### DETAILED DESCRIPTION OF THE INVENTION

The present invention concerns a cement-based substrate (6), hereinafter referred simply as substrate, which is specially modified in terms of its physical and chemical characteristics in order to provide an increase of the induction energy transfer systems efficiency. In the context of the present invention, cement-based substrate means a substrate consisting of a mixture comprising water, cement and agglomerates.

The developed substrate (6) was designed taking into consideration the electrical properties - conductivity and permittivity -, magnetic properties - coercivity and permeability - and mechanical properties in order to maximize the efficiency of the final mixture. This substrate (6) when applied in the centre of the coil (2) of a receiving unit (1) allows to maximize the electromagnetic field flux in that area.

In order to obtain this new substrate (6), materials - paramagnetic and ferromagnetic - with high magnetic permeability and low coercivity were integrated into the typical constitution of a cement-based substrate. The mixing of these materials with concrete allows to obtain electrical insulating materials or materials with very low electrical conductivity, which minimizes eddy currents and consequently power dissipation. To obtain a substrate with properties that significantly improve energy transmission efficiency through electromagnetic induction, a new mixture was developed.

In a preferred embodiment of the present invention, the substrate (6) consists of a mixture formed by water, cement and agglomerates. Specific dosages of a binder, a superplasticizer and magnetic particles are added to this mixture.

In an embodiment of the substrate (6) of the present invention, the mixture comprises dosage between 300 kg/m³ and 800 kg/m³ of binder, in order to give the necessary structural strength to withstand natural wear to which it is subjected. Any type of cement-based binder can be used, such as pozzolanic cement or Portland cement.

Still in another embodiment of the substrate (6) of the invention, combinable with any of the previous ones, the superplasticizer material may be a mixture of compounds formed by 0,2%-2,0% by mass of type A compounds, 0,2%-2,0% by mass of type B compounds, and 0,2%-2,0% by mass of type C compounds, to improve the properties of the system, namely to minimize the electrical permittivity. In particular, type A compounds may be polycarboxylates, sulphonaphthalenes, melamines, gluconates or a mixture among these compounds. Type B compounds may be mass water-repellent of zinc or calcium stearate type. Finally, the type C compound may be resin based on ethylene vinyl acetate copolymer.

A certain percentage by mass, between 2% and 70%, of particles with high magnetic permeability (µ_{r,eff}>4), such as oceanic basalt agglomerates, granular magnetite, synthetic magnetite microparticles, ferrite, steel or zinc filings, steel industry slag, mining slag, as well as superparamagnetic particles (e.g. zinc-manganese ferrites), is also added to this optimized composition. This type of particles has a high magnetic permeability and do not acquire remanent magnetization, which improves energy transfer.

Additionally, it is object of the present invention an induction energy transfer system comprising the substrate (6) described, in which an emitting unit (5) is embedded.

The developed induction energy transfer system is prepared to follow the set of standards established for the charging of electric devices and vehicles, using the conventional receiving (1) and emitting (5) units. In particular, the emitting unit (5) is identical to the units used in the market, adapted to be integrated into concrete, and more particularly into the substrate (6) of the invention.

In a preferred embodiment of the system, this comprises an emitting unit (5) embedded in the developed substrate (6) and a receiving unit (1), each of said units (5, 1) comprises a respective coil (7, 2).

Ideally, to minimize energy consumption, the emitting coil (7) should only be active when power transfer occurs. For this purpose, in an alternative embodiment, the system comprises a control unit embedded in the electronic system (8) of the emitting unit (5), and a sensor unit, both units being interconnected with the purpose of controlling the system operation. In particular, in an alternative embodiment of the system, both units are configured to activate/deactivate the emitting unit (5) and its coil (7), depending on the proximity of a receiving coil (2). This is achieved by using a set of sensors, of the ultrasonic type or *Fluxgate Magnetometers,* already used today for road traffic control. This type of technology can be used for detecting electronic equipment and for activating coils in dynamic charging with the passage of electric vehicles. Further, ideally both coils (7, 2) will need to be as aligned as possible with each other and at the shortest distance in order to maximize transfer efficiency. In an alternative embodiment of the system, the sensor unit is also configured to determine the position of the receiving unit (1) in relation to the emitting unit (5), allowing the control unit to measure the efficiency of the energy transfer and to transmit positioning information to assist the placement of the receiving unit.

Additionally, in another alternative embodiment of the system, the sensor unit is also adapted for the detection of objects such as metals and living beings, allowing the energy transmission to be switched off in case of safety risk. In this embodiment, the sensor unit comprises sensors of the inductive type.

Beyond the control electronics also used to ensure the correct functioning of the coils (7) integrated in the substrate (6), an electrical insulation suitable was used to prevent contact with water or damage on the surface of the coils (7). Said insulation is based on an insulating varnish for copper, consisting of polyurethane and polyamide, externally coated with PVC or any other material that guarantees the electrical insulation in the cement-based substrate where the coil is integrated, such as polyurethane, polyester, polyamide-imide or polyesterimide.

### EMBODIMENTS

Figure 1 illustrates the induction energy transfer system of the invention, where the emitting coil (7) is embedded in the developed cement-based substrate (6). The emitting coil (7) is connected to an electronic system (8), which is responsible for the application of a signal on said coil (7), characterized by a certain frequency and amplitude. The receiving coil (2) of the receiving unit (1) is connected to an electronic system (3) which enables the received energy to be stored, for example in a battery or capacitor, for use by an electrical device (4), such as a motor of a machine, a sensor, a LED system or an actuator. Optionally, energy may not be stored, being transferred directly to the electrical device (4).

In an embodiment of the object of the present invention, the substrate (6) and induction energy transfer system are employed for charging stationary electric vehicles. For this purpose, the emitting coil (7) must be integrated into the substrate (6) and must be properly dimensioned considering the power to be transferred. The emitting coil (7) should be integrated at a depth between 0.5 and 10cm, depending on the final application, in order to ensure the structural stability of the substrate (6). The substrate (6) used to coat the emitting coil (7) is doped with particles having specific magnetic properties. The static charging system also consists of an ultrasonic sensor or *Fluxgate Magnetometers,* in order to detect the presence of electric vehicles and to activate the emitting coil (7). The dynamic charging system of electric vehicles has properties similar to stationary charging, however it is constituted by several emitting coils (7) associated in parallel, which are activated as the vehicles pass through a sensor system.

In another embodiment of the object of the present invention, the substrate (6) and induction energy transfer system are employed for charging electronic devices, such as mobile phones, tablets, sensors, actuators and electronic devices comprising motors (such as electric scooters, equipment and tools used in the manufacturing industry). For the manufacture of substrate structures (6) allowing the charging of electrical devices, it is necessary to integrate emitting coils (7) into the substrate (6), coupled to an electrical control system (8) suitable for charging electronic devices (4). In order to improve energy transfer, the substrate (6) can be doped with particles having magnetic properties, improving energy transmission efficiency.

In another embodiment of the object of the present invention, the substrate (6) and induction energy transfer system are employed for signaling and lighting systems. Signaling and lighting systems can be manufactured through the integration of emitting coils (7) in the substrate (6), doped with particles having certain electrical and magnetic properties. The used coil (7) needs to be suitable for the area to be illuminated. After integration of the emitting coil (7), it is only necessary to place the lighting system on the surface of the substrate (6). The distances between the emitting coil (7) and the lighting system consisting of a receiving coil (2) can be up to 30 cm.

As will be evident to an expert in the field, the present invention should not be limited to the embodiments described in the present document, and several changes are possible which remain within the scope of present invention.

Obviously, the preferred embodiments presented are combinable, in the different possible ways, avoiding here the repetition of all these combinations.

## Claims

1. Cement-based substrate (6) for an inductive energy transfer system, said substrate (6) consisting of a mixture comprising water, cement and agglomerates; said mixture being **characterized in that** it additionally comprises:
- a binder dosage;
- a dosage of a superplasticizer material; and
- a percentage by mass of particles with magnetic properties.

2. Substrate (6) according to claim 1, **characterized in that** the binder has a dosage between 300 kg/m³ and 800 kg/m³.

3. Substrate (6) according to anyone of previous claims, **characterized in that** the superplasticizer material comprises a mixture of compounds formed by 0,2%-2,0% by mass of type A compounds, 0,2%-2,0% by mass of type B compounds, and 0,2%-2,0% by mass of type C compounds, wherein:
- type A compounds are at least one of or a mixture of polycarboxylates, sulphonaphthalenes, melamines and gluconates;
- type B compounds are mass water-repellent of zinc or calcium stearate type;
- type C compound is resin based on ethylene vinyl acetate copolymer.

4. Substrate (6) according to anyone of previous claims, **characterized in that** the percentage by mass of magnetic particles ranges between 2% and 70%.

5. Substrate (6) according to anyone of previous claims, **characterized in that** the percentage by mass of magnetic particles is formed by paramagnetic and ferromagnetic particles.

6. Substrate (6) according to claim 5, **characterized in that** magnetic particles are oceanic basalt agglomerates, granular magnetite, synthetic magnetite microparticles, ferrite, steel or zinc filings.

7. Substrate (6) according to anyone of previous claims, **characterized in that** the mixture has a magnetic permeability higher than 4.

8. Substrate (6) according to anyone of previous claims, **characterized in that** the mixture additionally comprises superparamagnetic particles.

9. Substrate (6) according to claim 8, **characterized in that** superparamagnetic particles are zinc-manganese ferrite.

10. Induction energy transfer system comprising:
- An emitting unit (5), consisting of at least one emitting coil (7);
- A receiving unit (1), consisting of at least one receiving coil (2);
**characterized in that**
- the emitting unit (5) is embedded in the substrate (6) of claims 1 to 9.

11. System according to claim 10, **characterized in that** at least one emitting coil (7) is electrically isolated.

12. System according to claim 11, **characterized in that** the insulation used is insulating varnish made of polyurethane and polyamide, externally coated with PCV.

13. System according to anyone of previous claims, **characterized in that** the emitting unit (5) comprises an electronic system (8) which includes a control unit and a sensor unit; wherein
the sensor unit comprises operational means configured to detect the presence of a receiving coil (2); and
the control unit comprises processing means adapted to control the operation of the emitting unit (5) and its emitting coil (7), depending on the presence of a receiving coil (5) detected by the sensor unit.

14. System according to claim 13, **characterized in that** the control unit additionally comprises communication means with external devices, specially adapted to establish a bi-directional connection with at least one external processing device, for alignment of the emitting coil (7) of the emitting unit (5) with the receiving coil (2) .

15. System according to claim 13 or 14, **characterized in that** the operating means of the sensor unit consist of at least one ultrasonic or magnetic sensor.
